# FASCICULE DE BREVET EUROPEEN

(11) **EP 2 329 557 B1**
(45) Date de publication et mention de la délivrance du brevet: **08.02.2012**
(21) Numéro de dépôt: 09814113.8
(22) Date de dépôt: 15.09.2009
(51) Int. Cl.: H01M 8/24, H01M 8/02, H01M 8/04

(54) **BRIDES DE SERRAGE MULTIFONCTIONS POUR PILE A COMBUSTIBLE**
MULTIFUNKTIONSSPANNKLEMMEN FÜR EINE BRENNSTOFFZELLE
MULTIFUNCTIONAL TIGHTENING CLAMPS FOR A FUEL CELL

(30) Priorité: 17.09.2008 FR 0856254
(43) Date de publication de la demande: 08.06.2011
(73) Titulaire: HELION, 13545 Aix en Provence Cedex (FR)
(72) Inventeur: CHAUDRON, Valéry, F-04100 Manosque (FR); MAZET, Stéphane, F-13330 Pelissanne (FR); QUINTIERI, Christian, F-13100 Aix-en-Provence (FR); VIAL, Lionel, F-13800 Istres (FR)
(74) Mandataire: Ilgart, Jean-Christophe
(86) Numéro de dépôt international: PCT/EP2009/061945
(87) Numéro de publication internationale: WO 2010/031765

(56) Documents cités:
- WO-A1-2004/032267
- WO-A1-2008/055356
- FR-A- 1 272 625
- JP-A- 2002 025 574
- US-A1- 2003 211 379
- US-A1- 2005 260 479
- US-A1- 2006 141 319
- US-A1- 2006 204 820

## Description

### DOMAINE DE L'INVENTION

L'invention se rapporte au domaine des piles à combustible dont les applications industrielles peuvent être stationnaires ou dédiées au transport.

Les applications fixes ou stationnaires concernent, par exemple, les hôpitaux et autres bâtiments de service pour lesquels l'éventualité d'une interruption d'alimentation électrique doit être exclue. Les applications relatives au transport concernent, entre autres, la propulsion des véhicules urbains de transport en commun, tels que les autobus et les tramways.

### ART ANTERIEUR ET PROBLEME POSE

La pile à combustible est un dispositif électrochimique qui convertit directement l'énergie chimique d'un combustible en énergie électrique. Le principe de fonctionnement de ce générateur électrochimique repose sur la réaction de synthèse électrochimique de l'eau. De nombreuses piles à combustible sont constituées d'une succession d'étages élémentaires appelés également cellules électrochimiques, comprenant chacun un élément de base constitué de deux électrodes, une anode et une cathode, auxquelles sont apportés continûment un comburant, par exemple de l'air ou de l'oxygène, et un combustible, par exemple de l'hydrogène, ces deux éléments gazeux restant séparés par une membrane échangeuse d'ions faisant office d'électrolyte. A l'anode, le combustible subit une oxydation catalytique libérant protons et électrons, dans le cas d'une pile à combustible du type à membrane échangeuse de protons. Les électrons produits circulent le long du circuit électrique extérieur, alors que les protons sont transportés de l'électrolyte vers la cathode, où ils se combinent avec les électrons et l'oxygène. Cette réduction cathodique s'accompagne d'une production d'eau et d'un établissement d'une différence de potentiel entre les deux électrodes.

Plusieurs types de piles à combustible coexistent et se différencient par la nature de leur électrolyte et leurs températures de fonctionnement. Concernant les piles à combustible fonctionnant à "basses" températures (températures inférieures à 100°C), la technologie la plus avancée est représentée par les piles à combustible à électrolyte polymère. L'invention développée ici utilise une pile à combustible de type PEM ("Proton Exchange Membrane" en anglais) dont l'électrolyte polymère est une membrane échangeuse de protons.

Le coeur d'une pile à combustible est constitué d'un assemblage de cellules électrochimiques élémentaires, empilées les unes sur les autres en nombre suffisant, afin d'obtenir les valeurs de tension et courant souhaitées.

Un tel empilement de cellules élémentaires d'un coeur de pile à combustible est couramment désigné par le terme anglais "stack".

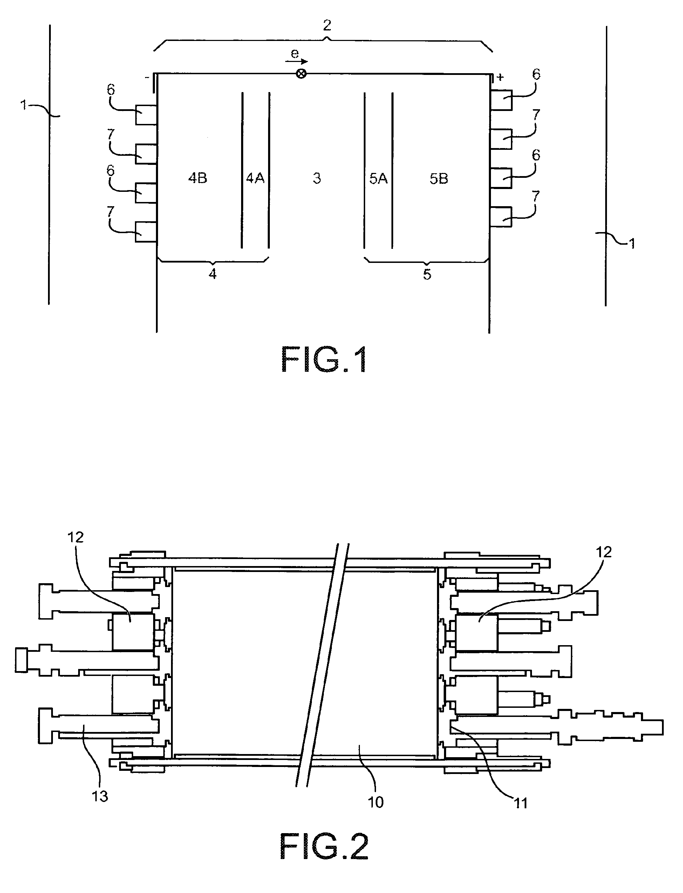

En référence à la figure 1, chaque cellule élémentaire d'une pile à combustible du type PEM se compose de deux plaques séparatrices 1, assurant l'apport des gaz réactifs et disposées de part et d'autre d'un ensemble électrode/membrane/électrode 2, dit "EME". Ce dernier comprend une membrane électrolytique échangeuse d'ions 3 et deux électrodes catalytiques à diffusion de gaz, à savoir une anode 4 et une cathode 5, constituées chacune d'une couche active 4A et 5A et d'une couche de diffusion 4B et 5B. A l'anode 4, après diffusion au travers de la couche de diffusion 4B, l'hydrogène est oxydé catalytiquement dans la couche active 4A pour donner des protons et des électrons. Les électrons empruntent un circuit électrique extérieur vers la cathode 5, alors que la membrane électrolytique 3 assure le transport des protons de l'anode 4 vers la cathode 5, mais aussi la séparation des gaz réactants. A la cathode 5, l'oxygène subit donc une réduction catalytique et se recombine avec des protons et les électrons pour donner de l'eau.

Dans l'empilement de cellules élémentaires, d'une pile à combustible du type PEM, les plaques polaires ou bipolaires 1 assurent également la fonction de distribution des gaz réactifs, c'est-à-dire l'oxygène de l'air et l'hydrogène, de conduction thermique, de collection des électrons produits et d'évacuation des produits de la réaction dont l'eau. Chaque plaque polaire ou bipolaire est en contact par une de ses faces avec une anode 4 d'un ensemble EME 2 de rang N et sur l'autre face avec une cathode 5 d'un ensemble de rang N + 1.

En outre, sur chaque plaque polaire ou bipolaire 1 se trouvent des canaux de circulation des gaz 6 et des canaux de circulation du réfrigérant 7.

Il faut alors assurer l'assemblage mécanique de l'ensemble de tous ces éléments constituant l'empilement de la pile à combustible, dont les plaques polaires ou bipolaires 1 et les ensembles EME 2. Le document WO 2004/032267 A1 présente une ploque d'extrémité pour une cellule électrochimique qui comprend un revêtement résistant à la corrosion.

Comme le montre la figure 2, cet assemblage peut nécessiter la mise en oeuvre, de part et d'autre de l'empilement 10, de différents éléments, avant le serrage mécanique de l'empilement 10. Ces éléments sont des collectrices de courant 11 assurant la fonction de collection du courant en regard des plaques polaires ou bipolaires, des brides de serrage 12 isolées électriquement ou non des collectrices de courant 11 placées aux extrémités de l'empilement 10, et des prolongateurs 13 permettant l'alimentation et l'évacuation de l'empilement 10 des gaz réactifs, du liquide de refroidissement et de l'eau produite par la réaction électrochimique. On ajoute qu'il faut assurer l'isolement des collectrices de courant 11 et des brides 12 par rapport aux gaz réactifs, qui peuvent être nocifs pour les matériaux les constituant.

Les brides de serrage 12, ainsi que les collectrices 11, sont percées, afin de permettre l'insertion des prolongateurs 13 jusqu'aux collecteurs usinés dans les plaques polaires ou bipolaires en

d'extrémité pour une cellule électrochimique qui comprend un revêtement résistant à la corrosion. regard de la collectrice correspondante. Enfin, la fonction de serrage de l'empilement est complétée par l'usage de tirants, qui sont insérés dans des orifices usinés dans les brides 12 et qui sont serrés à un couple déterminé, lors du montage final de l'empilement, selon l'effort de serrage désiré.

De plus, dans le cas où les brides de serrage 12 n'assurent pas la fonction d'isolation électrique, des bagues isolantes permettent de garantir l'isolation électrique entre les tirants (non représentés) et les brides de serrage 12. Un tel dispositif nécessite alors le montage de plusieurs pièces assurant chacune une fonction précise dans l'empilement, entre autres : collection du courant électrique, isolation électrique, alimentation et évacuation des gaz réactifs et du liquide de refroidissement et serrage de l'empilement. Cet assemblage de pièces présente donc l'inconvénient de compliquer la conception de l'empilement et de l'assemblage et du serrage de ce dernier, en générant des contraintes dimensionnelles.

L'objectif de l'invention est donc de remédier à ces inconvénients, en essayant de simplifier le montage et le serrage de l'empilement, afin de diminuer le coût de ce dernier et d'alléger les contraintes d'ordre mécanique générées l'assemblage de l'ensemble de plusieurs pièces entre elles.

### RESUME DE L'INVENTION

Le concept de l'invention propose d'assurer que ces quatre dernières fonctions énoncées de conduction électrique, d'isolation électrique, d'alimentation ou d'évacuation des gaz et du réfrigérant et de serrage mécanique, soient mises en oeuvre par une pièce unique multifonctions.

En conséquence, l'objet principal de l'invention est une bride de serrage monobloc multifonctions pour pile à combustible destinée à assurer, par une face de serrage, le serrage d'un empilement d'éléments de pile à combustible dont la surface d'extrémité possède à la fois des zones déterminées conductrices d'électricité et des zones déterminées isolantes vis-à-vis de l'électricité.

Selon l'invention, la surface inférieure de la bride de serrage est revêtue d'un matériau isolant sur des zones déterminées correspondantes aux zones isolantes de la surface d'extrémité de l'empilement, et la bride de serrage est revêtue sur sa surface d'un matériau conducteur aux zones correspondantes aux zones non isolées de la surface de l'extrémité de l'empilement et la bride de serrage selon l'invention se complète avantageusement d'orifices d'alimentation recouverts de matériau tolérant l'utilisation des gaz réactifs utilisés et de l'eau, et de préférence isolant électriquement.

Dans ce cas, il est préférable de prévoir des raccords vissés dans les orifices d'alimentation.

De préférence, le matériau isolant électriquement est une résine fluorée et le matériau conducteur électrique est de l'argent.

### LISTE DES FIGURES

L'invention et ses caractéristiques sera mieux comprise à la lecture de la description suivante, accompagnée de plusieurs figures représentant respectivement :
- Figure 1, déjà décrite, un schéma concernant le fonctionnement des piles à combustible ;
- figure 2, déjà décrite, en coupe, un exemple d'empilement d'une pile à combustible de l'art antérieur ;
- figure 3, en vue cavalière, un empilement de pile à combustible, utilisant des brides de serrage selon l'invention ;
- figure 4, en vue cavalière et de dessus, une bride de serrage selon l'invention ;
- figure 5, en vue cavalière et de dessus, la même bride de serrage selon l'invention de la figure 4, équipée de raccords ; et
- figure 6, en vue cavalière et de dessous, la même bride de serrage selon l'invention.

### DESCRIPTION DETAILLEE D'UNE REALISATION DE L'INVENTION

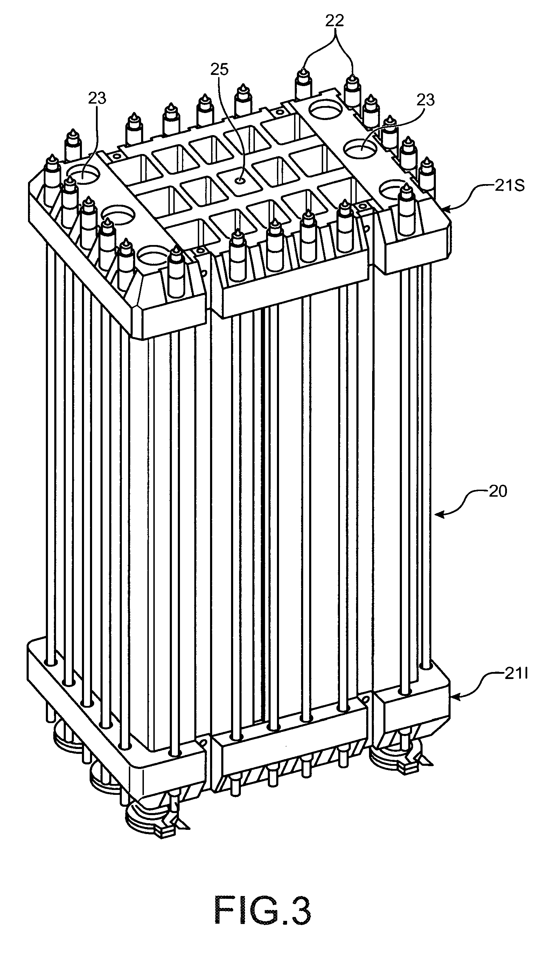

La figure 3 permet de comprendre l'utilisation des plaques de serrage selon l'invention. En effet, une pile à combustible y est représentée. Elle comprend principalement un empilement de cellules élémentaires de pile à combustible les unes sur les autres. Cet empilement est maintenu serré par une bride de serrage inférieure 21I et une bride de serrage supérieure 21S, ces deux brides de serrage inférieure 21I et supérieure 21S étant elles-mêmes serrées par plusieurs tirants 22, équipés de moyens de serrage, ceci de manière usuelle. Ces deux brides inférieure 21I et supérieure 21S sont monoblocs, c'est-à-dire faite chacune d'une seule pièce.

La partie supérieure de la bride de serrage supérieure 21S, et de manière générale toute la superficie de la bride qui n'est pas en contact avec une plaque séparatrice, est recouverte d'un matériau isolant électrique. Les éléments visualisés sur cette partie supérieure de la bride de serrage supérieure 21S sont des orifices d'alimentation et d'évacuation 23 placés sur deux côtés de celle-ci et destinés à l'alimentation et l'évacuation des différents fluides de fonctionnement, à savoir les combustibles, l'eau produite et un éventuel fluide de refroidissement et un conducteur central 25 pour extraire l'électricité produite dans l'empilement 20.

Les tirants 22 peuvent être préalablement équipés de rondelles dynamiques, qui permettent d'absorber en partie des changements de géométrie de l'empilement. En effet, même si celui-ci subit de fortes variations de géométrie, dues, par exemple, à la dilatation thermique des différents matériaux de l'empilement, il ne subit que de faibles variations de l'effort appliqué lors du serrage. Le nombre de rondelles utilisées est alors calculé en fonction de l'effort de serrage souhaité et est identique sur chaque vis, afin d'appliquer un effort de serrage uniforme sur tout l'empilement.

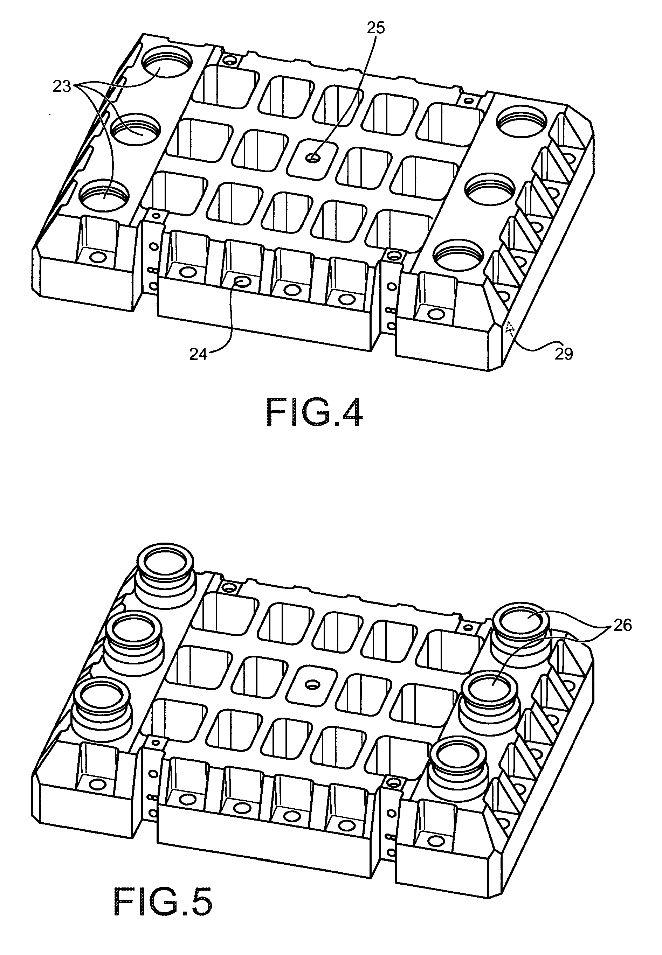

La figure 4 montre de manière plus détaillée une telle bride de serrage supérieure. De manière générale, les brides de serrage peuvent être constituées d'un matériau conducteur électrique, le principal étant que, mise à part a le conducteur central 25, toute la surface supérieure, c'est-à-dire opposée à la surface de serrage et les surfaces latérales de chaque bride de serrage soient au moins recouvertes d'un matériau isolant électriquement ou soient constituées de matériau électriquement isolant.

Pour pouvoir recouvrir les trous d'alimentation et d'évacuation 23, le matériau isolant électriquement utilisé doit être également compatible avec l'utilisation des gaz réactifs, par exemple l'hydrogène à l'anode, l'air ou l'oxygène à la cathode et avec l'eau, que ce soit l'eau de refroidissement ou l'eau produite par la réaction chimique mise en oeuvre dans l'empilement de la pile à combustible. Par conséquent, il est prévu de se passer de l'usage de prolongateurs, puisque la bride de serrage, dont le matériau constitutif n'est pas nécessairement compatible avec les fluides précités est isolée desdits fluides par le dépôt de matériau isolant électriquement dans les différents conduits. Donc, les brides de serrage sont multifonctions et assurent également la fonction d'alimentation fluidique à l'empilement.

De plus, le fait que le matériau isolant électriquement de dépôt est compatible avec les fluides utilisés évite que le matériau conducteur électrique constitutif des brides de serrage, lorsque c'est le cas, assure cette fonction.

Le matériau isolant électriquement, déposé sur la bride de serrage, doit également présenter des propriétés physico-chimiques stables vis-à-vis des températures de fonctionnement des applications envisagées de la pile à combustible. Un tel matériau, simultanément isolant électrique, compatible avec les fluides d'alimentation et stable aux températures de fonctionnement peut constituer un dépôt particulièrement mince, de l'ordre de quelques dixièmes de millimètre et peut être, par exemple, une résine fluorée.

En référence à la figure 5, on utilise des raccords 26 placés dans les orifices référencés 23 sur la figure 4, qui débouchent sur la surface supérieure de la bride de serrage. Les raccords 26 assurent l'interface entre l'empilement et les différentes installations d'alimentation et d'évacuation des fluides de fonctionnement de la pile à combustible. Ces raccords 26 remplacent avantageusement les prolongateurs, évoqués en regard de la figure 2 et utilisés dans les dispositifs selon l'art antérieur. En effet, ces raccords 26 sont moins encombrants, plus faciles à mettre en oeuvre et à concevoir dans la mesure où ils sont simplement vissés dans la partie opposée à la surface de serrage de bride de serrage, sans les traverser sur toute leur épaisseur, contrairement aux prolongateurs exposés en regard de la figure 2.

Le matériau constitutif de ces raccords 26 peut être, par exemple, un matériau polymère en composite, qui doit être compatible avec l'utilisation des gaz réactifs et avec l'eau. Il doit également assurer l'isolation électrique de l'empilement vis-à-vis des liaisons entre les brides de serrage et les différents moyens d'alimentation et d'évacuation des fluides pour l'ensemble de la pile à combustible.

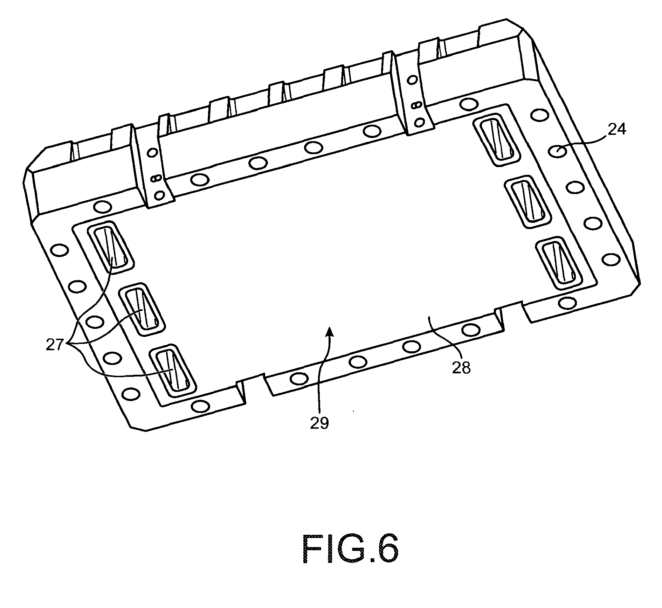

La figure 6 montre le dessous d'une bride de serrage selon l'invention et, en particulier, un dépôt métallique 28 placé sur la partie centrale de la surface inférieure 29, qui fait office de surface de serrage et qui est placé en regard de la dernière plaque séparatrice de l'empilement de cellules élémentaires de la pile à combustible. En d'autres termes, le dépôt métallique 28 et les joints isolants des orifices 27 occupent la partie de la surface de serrage 29 qui est en contact avec la dernière plaque de l'empilement. Un tel dépôt conducteur se substitue à l'utilisation d'une collectrice de courant et est de même superficie que la plaque séparatrice située en regard pour assurer un contact électrique optimal. Un tel dépôt conducteur électrique peut être constitué d'un matériau métallique, par exemple de l'argent, et peut être d'une épaisseur très faible, de l'ordre de quelques dizaines de microns. Par contre, des collecteurs 27, trois de chaque côté, correspondants aux orifices d'alimentation et d'évacuation 23 (figure 4), sont isolés électriquement, c'est-à-dire qu'ils sont recouverts d'un dépôt de matériau isolant. De même, sur tout le restant de la surface de serrage 29 de cette bride multifonctions, en particulier les bords, se trouve un dépôt de matériau isolant électriquement. Un tel matériau isolant électriquement doit être stable aux températures de fonctionnement de la pile à combustible. Sur cette figure 6, on a également fait figurer les orifices latéraux 24 destinés au passage des tirants de serrage de l'empilement.

La bride de serrage selon l'invention revêt donc un caractère multifonctions car elle assure l'isolation électrique des conduits, la transmission du courant électrique produit vers l'extérieur de l'empilement, la circulation des différents fluides de fonctionnement et, bien entendu, à l'aide de tirants, le serrage de l'empilement de l'ensemble de la pile.

## Revendications

1. Bride de serrage monobloc multifonctions pour pile à combustible destinée à assurer par une face de serrage (29) l'empilement des éléments constitutifs de la pile à combustible, cet empilement ayant une surface d'extrémité possédant à la fois des zones déterminées conductrices d'électricité et des zones déterminées isolées vis-à-vis de l'électricité,
**caractérisée en ce que** la surface inférieure de la bride de serrage est revêtue d'un matériau isolant électriquement sur les zones déterminées correspondantes aux zones isolées de la surface d'extrémité de l'empilement, et est constituée d'un matériau conducteur sur une surface conductrice (28)- de cette face de serrage (29), la surface conductrice (28) correspondant aux zones non isolées de la surface de l'extrémité de l'empilement et **en ce que** des orifices d'alimentation et d'évacuation (23) sont recouverts d'un matériau tolérant l'utilisation des gaz réactifs et de l'eau, utilisés dans le fonctionnement de la pile à combustible.

2. Bride de serrage selon la revendication 1, **caractérisée en ce que** le matériau recouvrant les orifices d'alimentation et d'évacuation (23) est isolant électriquement.

3. Bride de serrage selon la revendication 2, **caractérisée en ce qu'**elle se complète de raccords (26) vissés dans les orifices d'alimentation et d'évacuation (23).

4. Bride de serrage selon la revendication 1, **caractérisée en ce que** le matériau isolant est une résine fluorée.

5. Bride de serrage selon la revendication 1, **caractérisée en ce que** le matériau conducteur électrique est de l'argent.

## Claims

1. A single-piece multifunctional tightening clamp for a fuel cell intended to ensure, via a tightening surface (29), the stack of component elements of the fuel cell, said stack having an end surface having both predetermined electrically conducting areas and predetermined electrically insulating areas,
**characterized in that** the lower surface of the tightening clamp is covered with an electrically insulating material over the predetermined areas corresponding to the insulated areas of the end surface of the stack, and is covered with a conducting material on a conducting surface (28) of said tightening surface (29), the conducting surface (28) corresponding to the non-insulated areas of the end surface of the stack, and **in that** supply and discharge openings (23) are covered with a material tolerating the use of the reactive gases used and water, used during operation of the fuel cell.

2. The tightening clamp according to claim 1, **characterized in that** the material covering the supply and discharge openings (23) is electrically insulating.

3. The tightening clamp according to claim 2, **characterized in that** it is completed by connectors (26) screwed into the supply and discharge orifices (23).

4. The tightening clamp according to claim 1, **characterized in that** the insulating material is a fluorinated resin.

5. The tightening clamp according to claim 1, **characterized in that** the electrically conducting material is silver.

## Patentansprüche

1. Einstückiger Multifunktions-Spannflansch für eine Brennstoffzelle, der dazu ausgelegt ist, mittels einer Spannfläche (29) die Stapelung der aufeinander folgenden Elemente der Brennstoffzelle zu gewährleisten, wobei diese Stapelung eine Erdoberfläche aufweist, die gleichzeitig bestimmte elektrisch leitende Zonen und elektrisch isolierende Zonen besitzt,
**dadurch gekennzeichnet, dass** die untere Oberfläche des Spannflansches auf den bestimmten Zonen entsprechend den isolierten Zonen der Endoberfläche der Stapelung mit einem elektrisch isolierenden Material beschichtet ist, und auf einer leitenden Oberfläche (28) dieser Spannfläche (29) aus einem leitfähigen Material gebildet ist, wobei die leitfähige Oberfläche (28) den nicht isolierten Zonen der Endoberfläche der Stapelung entspricht, und dass Zuführ- und Abführöffnungen (23) mit einem Material bedeckt sind, welches die Verwendung von reaktiven Gasen und von Wasser toleriert, die während des Betriebes der Brennstoffzelle verwendet werden.

2. Spannflansch nach Anspruch 1, **dadurch gekennzeichnet, dass** das Material, welches die Zuführ- und Abführöffnungen (23) bedeckt, elektrisch isolierend ist.

3. Spannflansch nach Anspruch 2, **dadurch gekennzeichnet, dass** es mit Anschlüssen (26) vervollständigt ist, die in die Zuführ- und Abführöffnungen (23) geschraubt sind.

4. Spannflansch nach Anspruch 1, **dadurch gekennzeichnet, dass** das isolierende Material ein fluoriertes Harz ist.

5. Spannflansch nach Anspruch 1, **dadurch gekennzeichnet, dass** das elektrisch leitfähige Material Silber ist.
